# EUROPÄISCHE PATENTSCHRIFT

(11) **EP 3 575 714 B1**
(45) Veröffentlichungstag und Bekanntmachung des Hinweises auf die Patenterteilung: **25.06.2025**
(21) Anmeldenummer: 19174357.4
(22) Anmeldetag: 14.05.2019
(51) Int. Cl.: F25D 11/00, F25D 21/14, F25D 23/06

(54) **KÜHLGERÄT MIT EINEM VAKUUM-ISOLATIONSPANEL**
REFRIGERATOR WITH A VACUUM INSULATION PANEL
APPAREIL DE REFROIDISSEMENT POURVU D'UN PANNEAU ISOLANT SOUS VIDE

(30) Priorität: 29.05.2018 CH 6822018
(43) Veröffentlichungstag der Anmeldung: 04.12.2019
(73) Patentinhaber: V-Zug AG, 6300 Zug (CH)
(72) Erfinder: Oechsle, Hans-Peter, 6830 Rankweil (AT); Bachmann, Adrian, 8590 Romanshorn (CH)
(74) Vertreter: E. Blum & Co. AG

(56) Entgegenhaltungen:
- EP-A1- 1 505 359
- WO-A1-2015/165526
- CH-A2- 711 097
- DE-A1- 102007 051 333
- DE-U1- 212014 000 174
- JP-A- 2004 101 028
- US-A- 5 251 455
- US-A1- 2006 076 863

## Beschreibung

### Gebiet der Erfindung

Die Erfindung betrifft ein Kühlgerät gemäss Anspruch 1. Dabei betrifft sie ein Kühlgerät mit einem Nutzraum, bei welchem rückseitig ein Kühlelement sowie eine Isolation angeordnet sind.

### Hintergrund

Bei Kühlgeräten, insbesondere bei Kühlschränken oder Gefriergeräten, ist ein Kühlelement, insbesondere der Verdampfer einer Wärmepumpe, vorgesehen, um den Nutzraum zu kühlen. Zudem ist bei Nutzräumen, welche mit Temperaturen über dem Gefrierpunkt betrieben werden, im Bereich unterhalb des Kühlelements meist ein Auffangbehälter vorgesehen, um Kondensatwasser aufzufangen. Auch bei Gefriergeräten kann es vorkommen, dass Kondensatwasser oder Tauwasser anfällt und abgeleitet werden muss, **z.B.** im Falle einer No-Frost Einheit mittig oder obenliegend im Gerät.

EP 1 505 359 A1 zeigt einen Kühlschrank mit einem Kunstharzschaum und einem Vakuum-Isolator. Die Vakuum-Isolatoren sind im Wesentlichen gleich breit wie die Rückwand.

JP 2004 10 1028 A beschreibt einen Kühlschrank mit einem an der Rückseite angeordneten Vakuum-Isolationsmaterial. Die Tauwasserleitung ist mittels Urethan eingeschäumt.

DE 10 2007 051333 zeigt ein Kältegerätegehäuse mit Rohrdurchführung. Die Gehäusewand umfasst wenigstens eine Aussenhaut und eine von der Aussenhaut begrenzte Isolationsschicht.

US 5 251 455 betrifft einen Kühlschrank mit Isolationspanelen, welche zumindest eine ganze Seite des Gefrierfachs sowie dessen Decke abdecken.

DE 21 2014 000174 zeigt einen Kühlschrank mit einem Vakuum-Dämmmaterial, das die ganze Rückseite des Geräts abdeckt.

CH 711 097 zeigt ein Kühlgerät, bei welchem die Tauwasserleitung zwischen Gefrierfach und Isolationselement verläuft.

WO 2015 165526 zeigt ein Wasserabflusssystem für ein Kühlgerät.

Das Dokument US2006/076863A1 offenbart ein weiteres Kühlgerät aus dem Stand der Technik.

### Darstellung der Erfindung

Es stellt sich die Aufgabe, ein Kühlgerät der eingangs genannten Art mit gutem Wirkungsgrad bereitzustellen.

Diese Aufgabe wird vom Kühlgerät gemäss Anspruch 1 gelöst.

Die vorliegende Erfindung ist im unabhängigen Anspruch 1 offenbart. Weitere Ausführungsbeispiele sind in den abhängigen Ansprüchen offenbart.

Demgemäss besitzt das Kühlgerät gemäß Anspruch 1 zumindest die folgenden Komponenten:
- Einen Nutzraum: Im Nutzraum wird das Kühlgut gelagert.
- Ein Kühlelement: Dieses ist an einer Wand des Nutzraums angeordnet und dient der Kühlung des Nutzraums.

Weiter ist ausserhalb des Kühlelements und des Nutzraums ein Vakuum-Isolationspanel (VIP) angeordnet. Dieses überdeckt mindestens 50%, insbesondere mindestens 60%, insbesondere mindestens 80% des Nutzraums. Dies ist so zu verstehen, dass das Vakuum-Isolationspanel bei Ansicht von aussen auf das Gerät, in einer Projektion senkrecht zum Vakuum-Isolationspanel, mindestens 80% des Nutzraums verdeckt.

Dem steht die Erkenntnis zugrunde, dass an dieser Stelle eine optimale Isolation des Geräts wichtig ist, da das Kühlelement und somit auch der rückseitige Bereich des Nutzraums sehr kalte Komponenten im System darstellen.

Mit Vorteil überdeckt das Vakuum-Isolationspanel mindestens 90% des Nutzraums, insbesondere den ganzen Nutzraum.

Weiter besitzt das Kühlgerät u.a. folgende Komponenten:
- Einen Auffangbehälter: Dieser dient dazu, beim Kühlelement auskondensierendes Wasser aufzufangen. Er ist mit Vorteil hinten am Nutzraum angeordnet. Er kann z.B. einstückig in der Wand ausgeformt sein, z.B. als Delle oder Rinne in der Wand.
- Eine Abflussleitung: Diese führt vom Auffangbehälter in einen Aussenbereich des Kühlgeräts. Unter einem "Aussenbereich" ist dabei ein Gerätebereich zu verstehen, der im Gasaustausch mit der Umgebung steht, so dass dorthin gebrachtes Wasser, insbesondere Kondensat oder Tauwasser verdunsten kann.

Die Abflussleitung weist zumindest die folgenden Abschnitte auf:
- Einen ersten Abschnitt: Dieser ist mit dem Auffangbehälter verbunden, z.B. über einen geeigneten Adapter oder durch Kleben,
- Einen zweiten Abschnitt: Der zweite Abschnitt schliesst an den ersten Abschnitt an. Er verläuft, von der Rückseite des Kühlgeräts gesehen, seitlich neben dem Vakuum-Isolationspanel nach unten. Mit anderen Worten ist der zweite Abschnitt also nicht durch das Vakuum-Isolationspanel abgedeckt. Dadurch wird die Gefahr, dass dieser Abschnitt vereist, reduziert.

Diese Anordnung kann weiter dadurch verbessert werden, dass der zweite Abschnitt in einer Ecke des Kühlgeräts verläuft.

In einem besonders kompakten Aufbau führt die Abflussleitung zu einem Verdunstungsbehälter, der tiefer als der Nutzraum angeordnet ist. Mit Vorteil ist der Verdunstungsbehälter mindestens teilweise vertikal unterhalb des Nutzraums angeordnet.

Zur Verbesserung der Isolation kann zwischen dem Vakuum-Isolationspanel und dem Nutzraum ein mit einem Isolationsmaterial ausgeschäumter Isolationsbereich angeordnet sein. In diesem Fall verläuft die Abflussleitung mit Vorteil zumindest teilweise durch den Isolationsbereich, **d.h.** sie ist mindestens teilweise im Isolationsmaterial eingeschäumt.

Die Abflussleitung kann über einen Adapter mit dem Auffangbehälter verbunden sein. Dadurch kann die Konstruktion den jeweiligen Anforderungen besser angepasst werden.

Mit Vorteil besteht der Adapter aus einem weicheren Material als die Abflussleitung, so dass er **z.B.** Bewegungen der Abflussleitung, beispielsweise im Ausschäumprozess, auffangen kann, und/oder so dass die Lage der Abflussleitung durch die wenigstens teilweise flexible Geometrie des Adapters flexibler gewählt werden kann.

Bevorzugt besitzt das Kühlgerät zusätzlich zum ersten Nutzraum einen zweiten Nutzraum, welcher unterhalb des ersten Nutzraums angeordnet ist.

Insbesondere ist das Kühlgerät dazu ausgestaltet, den zweiten Nutzraum auf eine tiefere Temperatur zu kühlen als den ersten Nutzraum. So kann es **z.B.** dazu ausgestaltet sein, den zweiten Nutzraum auf Temperaturen unterhalb von -10°C zu kühlen, während es den ersten Nutzraum auf Temperaturen zwischen 0°C und 10°C kühlt.

In diesem Fall kann das Vakuum-Isolationspanel mindestens 50%, insbesondere mindestens 60%, insbesondere mindestens 80% beider Nutzräume überdecken, insbesondere 90% beider Nutzräume, insbesondere beide Nutzräume vollständig, so dass sich eine gute Isolation der gesamten Geräterückseite ergibt.

Die erwähnte Abflussleitung kann dabei am zweiten Nutzraum vorbei bis unterhalb des zweiten Nutzraums führen.

Vorzugsweise befindet sich die Abflussleitung zumindest über einen Teil der Höhe des zweiten Nutzraums in einer Ecke des Kühlgeräts, so dass sie auch bei einem sehr kalten zweiten Nutzraum nicht einfriert.

Beim Kühlgerät handelt es sich mit Vorteil um einen Kühlschrank und/oder um ein Gefriergerät, insbesondere um ein Haushaltsgerät für Lebensmittel oder für ein anderes Kühlgut.

### Kurze Beschreibung der Zeichnungen

Weitere Ausgestaltungen, Vorteile und Anwendungen der Erfindung ergeben sich aus den Ansprüchen und aus der nun folgenden Beschreibung anhand der Figuren. Dabei zeigen:
Fig. 1 einen schematischen Schnitt durch ein Kühlgerät mit zwei Nutzräumen,
Fig. 2 eine Ansicht eines Kühlgeräts von hinten, wobei die äussere Rückwand sowie die thermische Isolation nicht dargestellt sind,
Fig. 3 das Gerät nach Fig. 2, wobei das Vakuum-Isolationspanel dargestellt ist,
Fig. 4 einen Schnitt entlang Linie IV-IV von Fig. 2,
Fig. 5 einen vertikalen Schnitt senkrecht zur Rückwand im Bereich des Auffangbehälters,
Fig. 6 einen Schnitt durch den Adapter, den Stutzen des Auffangbehälters sowie die Abflussleitung, Fig. 7 eine Ansicht des Adapters und
Fig. 8 einen Schnitt durch den Adapter.

### Wege zur Ausführung der Erfindung

### Definitionen:

Die Begriffe "hinten", "Rückseite", "vorne", "Vorderseite" sind so definiert, dass sich die Türe des Kühlgeräts vorne, **d.h.** auf der Vorderseite befindet, während die hinten am Gerät angeordnete Rückseite die der Türe gegenüber liegende Geräteseite bezeichnet.

Begriffe wie "oben", "unten", "horizontal" und "vertikal" beziehen sich auf die bestimmungsgemässe Orientierung des Geräts, bei welcher die Türe vertikal verläuft.

Begriffe wie "innen", "innenseitig", "aussen", "aussenseitig" beziehen sich auf den Nutzraum des Geräts, welcher als das Innere betrachtet wird. Bei einem Bauteil bezeichnet somit "innen" die der Mitte des Nutzraums zugewandte Seite und "aussen" die von der Mitte des Nutzraums abgewandte Seite.

Ein "Isolationsmaterial" ist ein Körper mit einer Wärmeleitfähigkeit von weniger als 0.1 W/mK, insbesondere von weniger als 0.05 W/mK. Beim Vakuum-Isolationspanelen kann der Wert sogar unter 0.01 W/mK liegen, **z.B.** bei 0.003 - 0.006 W/mK.

### Grundaufbau:

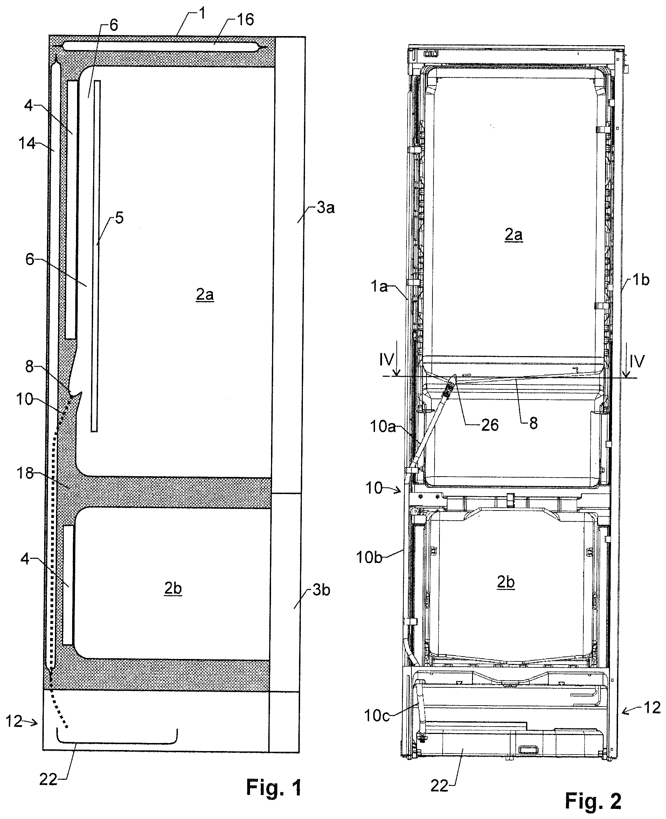

Fig. 1 zeigt ein Kühlgerät mit einem Gehäuse 1, in dem zwei Nutzräume 2a, 2b angeordnet sind. Jeder Nutzraum 2a, 2b ist von der Gerätevorderseite her über eine Türe 3a bzw. 3b zugänglich.

Zum Kühlen der Nutzräume 2a, 2b sind geeignete Kühlelemente 4 vorgesehen. Dabei handelt es sich **z.B.** um Verdampfer eines Wärmepumpenkreislaufs.

Bevorzugt ist der erste Nutzraum 2a als Kühlfach mit einem Temperaturbereich von z.B. 0°C bis 10°C und der zweite Nutzraum 2b als Tiefkühlfach mit einem Temperaturbereich von **z.B.** -25°C bis -10°C ausgestaltet.

Die Kühlelemente 4 sind jeweils bevorzugt an der Rückseite des ihnen zugeordneten Nutzraums 2a, 2b angeordnet. Die Kühlelemente 4 können jedoch auch an einer Seitenwand und/oder an der Decke des jeweiligen Nutzraums 2a, 2b angeordnet sein.

Wie im Beispiel und nicht einschränkend für den ersten Kühlraum 2a dargestellt, kann vor dem Kühlelement 4 ein Rückwandelement 5 vorgesehen sein und einen Kühlluftkanal 6 bilden, durch welchen zu kühlende Luft vom Nutzraum 2a am Kühlelement 4 vorbei streicht.

Optional kann ein Ventilator vorgesehen sein, um die Luft durch den Kühlluftkanal 6 zu fördern.

Beim Kühlen kann aus der Luft Wasser auskondensieren, das sich an der vom Kühlelement 4 gekühlten Fläche niederschlägt. Deshalb ist unterhalb des Kühlelements 4 rückseitig im Nutzraum ein Auffangbehälter 8 vorgesehen.

Vom Auffangbehälter 8 führt eine gestrichelt dargestellte Abflussleitung 10 in den Bodenbereich 12 des Kühlgeräts und dort zu einem Verdunstungsbehälter 22. Dieser steht mit der Umgebung in Kontakt, so dass das dort aufgefangene Wasser verdunsten kann.

Die Nutzräume 2a, 2b sind nach aussen thermisch isoliert. Hierzu sind zum einen Vakuum-Isolationspanele 14 (und allenfalls 16) und zum anderen mit Isolationsmaterial ausgeschäumte Isolationsbereiche 18 vorgesehen. In der Ausführung nach Fig. 1 ist ein Vakuum-Isolationspanel 14 an der Geräterückseite und ein weiteres Vakuum-Isolationspanel 16 an der Geräteoberseite dargestellt. Weitere solche Panele können **z.B.** in den Türen 3a, 3b, den Seitenwänden des Geräts sowie unterhalb einer oder beider Nutzräume 2a, 2b angeordnet werden.

### Rückwandisolierung:

Fig. 2 - 4 zeigen den Aufbau der Rückwandisolierung.

Wie ersichtlich, ist ein einziges Vakuum-Isolationspanel 14 für die Rückwand vorgesehen. Es überdeckt mindestens 80%, insbesondere mindestens 90% beider Innenräume 2a, 2b.

Insbesondere dank der weiter unten beschriebenen Führung der Abflussleitung 10 kann es ohne Durchbrüche ausgestaltet sein.

Der Zwischenraum zwischen dem Vakuum-Isolationspanel 14 und der Rückwand der Nutzräume bildet Teil des erwähnten Isolationsbereichs 18 und kann (dort, wo sich keine weiteren Komponenten befinden) mit einem Isolationsmaterial ausgeschäumt sein.

### Abflussleitung:

Um das Wasser vom Auffangbehälter 8 abzuführen, ist die erwähnte Abflussleitung 10 vorgesehen.

Der Verlauf der Abflussleitung ist in Fig. 2 bis 4 dargestellt.

Die Abflussleitung 10 besitzt einen ersten Abschnitt 10a, der mit dem Auffangbehälter 8 verbunden ist. Er führt vom Abflussbehälter 8 schräg nach aussen.

Weiter besitzt die Abflussleitung 10 einen zweiten Abschnitt 10b, der sich an den ersten Abschnitt 10a anschliesst. Dieser verläuft in einer Ecke 20 des Kühlgeräts. Unter "Ecke" ist dabei ein Bereich zu verstehen, bei welchem zwei vertikale Wände des Geräts aufeinander treffen, im vorliegenden Fall eine Seitenwand 1a sowie die Rückwand 1c.

Weiter kann die Abflussleitung 10 einen dritten Abschnitt 10c besitzen, der an den zweiten Abschnitt 10b anschliesst und zum Verdunstungsbehälter 22 im Bodenbereich 12 des Kühlgeräts führt.

Der erste Abschnitt 10a hat die Aufgabe, das Wasser im Bereich des ersten Nutzraums 2a nach aussen zu führen, in die Ecke 20 des Geräts. Er verläuft mit Vorteil vollständig auf einer Höhe oberhalb des zweiten Kühlbereichs 2b, um ein Gefrieren von Wasser in diesem Abschnitt zu verhindern.

Im Bereich des zweiten Abschnitts 10b verläuft die Abflussleitung 10 über die Höhe des zweiten Nutzraums 2b neben dem Vakuum-Isolationspanel 14 nach unten. Da sie an dieser Stelle nicht zwischen dem Vakuum-Isolationspanel 14 und dem zweiten Nutzraum 2b verläuft, sondern (von der Rückseite gesehen) seitlich des Isolationspanels 14, kann das Gefrieren von Wasser in der Leitung verhindert werden.

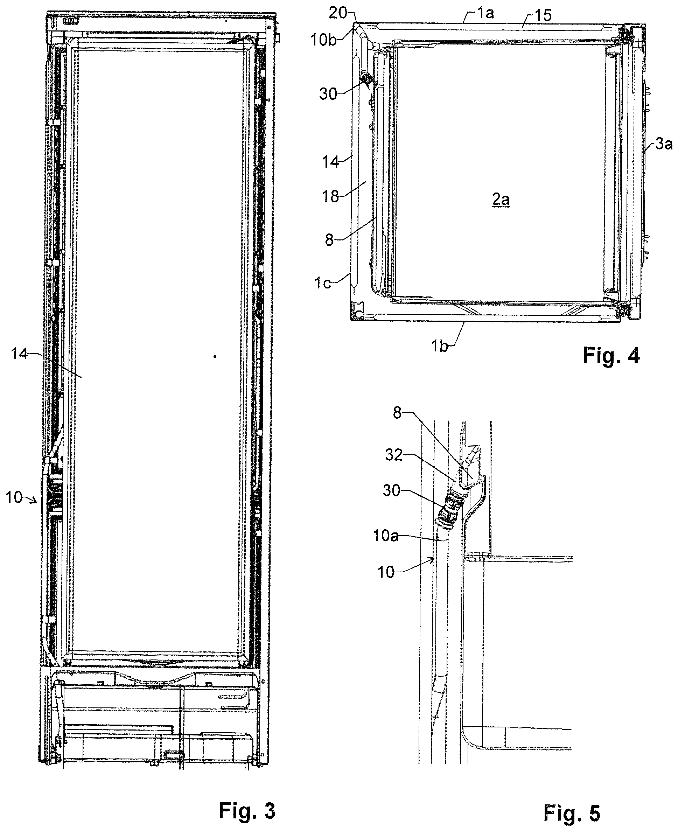

Wie aus Fig. 4 ersichtlich, kann die Abflussleitung 10 zumindest im zweiten Abschnitt 10b die Aussenwände 1a und/oder 1c berühren, die im Bereich der Ecke 20 zusammenlaufen, so dass seine Temperatur hoch bleibt.

Die angrenzenden Vakuum-Isolationspanele 14 der Rückwand 1c und der Seitenwand 1b dämmen den zweiten Abschnitt 10b nach aussen nicht ab.

Mit Vorteil verläuft die Abflussleitung 10 über mindestens 40%, insbesondere mindestens 60%, insbesondere mindestens 80%, des ersten und/oder den zweiten Abschnitt 10a, 10b gestreckt, **d.h.** grade.

Die Abflussleitung 10 kann im Isolationsbereich 18 im Isolationsmaterial mindestens teilweise eingeschäumt oder in anderer Weise zumindest von einer Seite eingebettet sein. Sie sollte deshalb eine entsprechende Temperaturbeständigkeit und Dichtigkeit besitzen.

Beispielsweise besteht die Abflussleitung 10 aus einem Rohr aus Polyethylen oder Hart-PVC.

Wie aus Fig. 2 ersichtlich, ist die Abflussleitung 10 an einer Stelle 26 mit dem Auffangbehälter 8 verbunden, die sich nicht in der Mittelebene des Geräts befindet, sondern näher bei einer der beiden Seitenwände 1a, 1b des Geräts, nämlich näher an derjenigen Seitenwand 1a, entlang welcher der zweite Abschnitt 10b der Abflussleitung verläuft. Dadurch kann der Weg des Wassers verkürzt werden und die Gefahr des Einfrierens wird reduziert.

### Adapter:

Die Abflussleitung 10 ist mit dem Auffangbehälter 8 über einen Adapter 30 verbunden. Ein möglicher Aufbau des Adapters 30 ergibt sich aus Fig. 5 - 8.

Der Adapter 30 ist auf der Seite des Auffangbehälters 8 an einem Stutzen 32 befestigt. Der Stutzen 32 ist am Auffangbehälter 8 angeordnet.

Der Stutzen 32 kann insbesondere direkt am Material des Auffangbehälters 8 ausgeformt sein, oder er kann z.B. am Auffangbehälter 8 angeschweisst oder angeklebt sein.

Auf der Seite der Abflussleitung 10 ist der Adapter 30 mit dem ersten Abschnitt 10a der Abflussleitung verbunden.

Mit anderen Worten verbindet der Adapter 30 den Stutzen 32 mit der Abflussleitung 10.

Der Adapter 30 kann mit dem Stutzen 32 und/oder der Abflussleitung 10 durch Stecken verbunden sein.

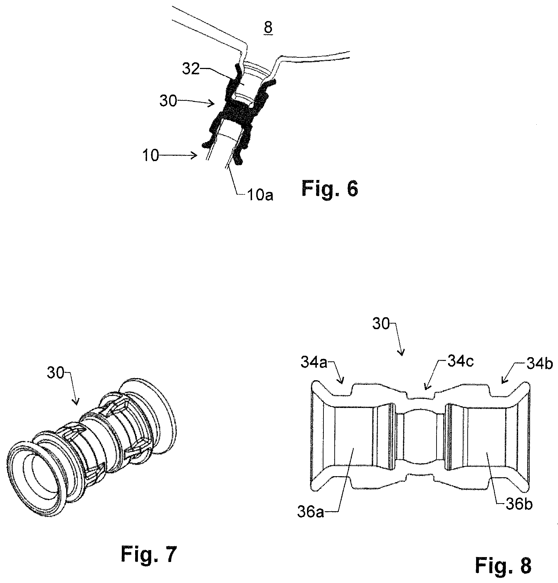

Hierzu besitzt der Adapter 30, wie in Fig. 8 gezeigt, z.B. einen ersten Abschnitt 34a und einen zweiten Abschnitt 34b, die über einen dritten Abschnitt 34c miteinander verbunden sind.

Der erste und der zweite Abschnitt 34a, 34b weisen jeweils einen zylindrischen Innenbereich 36a bzw. 36b auf, deren Durchmesser auf die Abflussleitung 10 bzw. den Stutzen 32 abgestimmt sind.

Die Abflussleitung 10 ist mit dem ersten Abschnitt verbunden, insbesondere am ersten Abschnitt 34a eingesteckt. Der Stutzen 32 ist mit dem zweiten Abschnitt 34b verbunden, insbesondere am zweiten Abschnitt 34b eingesteckt.

Der dritte Abschnitt 34c kann typischerweise flexibler als der erste und der zweite Abschnitt ausgestaltet sein und erlaubt es, Bewegungen der Abflussleitung 10, **z.B.** während dem Ausschäumen des Isolationsbereichs 18, besser zu folgen, und die Gefahr eines Verrutschens des Schlauchs an seinem Anschluss wird reduziert.

Um eine möglichst freie Bewegung zu ermöglichen, werden die Abflussleitung 10 und der Stutzen 32 mittels des Adapters 30 beabstandet voneinander gehalten, **d.h.** sie reichen nicht so weit in den dritten Abschnitt 34c des Adapters 30 hinein, dass sie sich berühren würden. So können die Bewegungen zwischen den beiden Teilen vom Adapter 30 gut aufgenommen werden.

Mit Vorteil besteht der Adapter 30 aus einem thermoplastischen Material, **z.B.** aus TPE.

Zumindest ist es von Vorteil, wenn der Adapter 30 aus einem weicheren und/oder elastischeren Material besteht als die Abflussleitung 10 und/oder der Stutzen 32, damit er die Bewegungen der Abflussleitung 10 besser aufnehmen kann. Dabei nimmt der Adapter 30 die Bewegung insbesondere im Abschnitt 34c auf.

### Bemerkungen:

Wie ersichtlich, führt die Abflussleitung am Vakuum-Isolationspanel vorbei. Sie führt also nicht durch das Vakuum-Isolationspanel hindurch, wodurch die Herstellung des Panels vereinfacht wird.

Die vorliegende Technik kann grundsätzlich auch bei Geräten mit nur einem Nutzraum oder mit mehr als zwei Nutzräumen eingesetzt werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Kühlgerät mit
einem ersten Nutzraum (2a),
einem an einer Wand des ersten Nutzraums (2a) angeordneten Kühlelement (4) zum Kühlen des ersten Nutzraums (2a),
einem ausserhalb des Kühlelements (4) und dem ersten Nutzraum (2a) angeordneten Vakuum-Isolationspanel (14), welches mindestens 50%, insbesondere mindestens 60%, insbesondere mindestens 80% des ersten Nutzraums (2a) überdeckt,
einem Auffangbehälter (8), um beim Kühlelement (4) auskondensierende Flüssigkeit aufzufangen, und
einer Abflussleitung (10), welche vom Auffangbehälter (8) in einen Aussenbereich des Kühlgeräts führt,
wobei die Abflussleitung (10) aufweist:
einen ersten Abschnitt (10a), der mit dem Auffangbehälter (8) verbunden ist, und
einen zweiten Abschnitt (10b), der an den ersten Abschnitt (10a) anschliesst und, von der Rückseite des Kühlgeräts gesehen, seitlich neben dem Vakuum-Isolationspanel (14) nach unten verläuft.

2. Kühlgerät nach Anspruch 1, wobei das Vakuum-Isolationspanel (14) mindestens 90% des ersten Nutzraums (2a) überdeckt, insbesondere den ganzen ersten Nutzraum (2a).

3. Kühlgerät nach einem der vorangehenden Ansprüche, wobei der Aussenbereich sich im Bodenbereich (12) des Kühlgeräts befindet.

4. Kühlgerät nach einem der vorangehenden Ansprüche, wobei der zweite Abschnitt in einer Ecke (20) des Kühlgeräts verläuft.

5. Kühlgerät nach einem der Ansprüche 3 oder 4, wobei die Abflussleitung (10) zu einem Verdunstungsbehälter (22) führt, der tiefer als der erste Nutzraum (2a) angeordnet ist, und insbesondere wobei zumindest ein Teil des Verdunstungsbehälters (22) unterhalb des ersten Nutzraums (2a) angeordnet ist und zwar vertikal unterhalb.

6. Kühlgerät nach einem der Ansprüche 3 bis 5, wobei zwischen dem Vakuum-Isolationspanel (14) und dem ersten Nutzraum (2a) ein mit einem Isolationsmaterial ausgeschäumter Isolationsbereich (18) angeordnet ist, wobei die Abflussleitung (10) mindestens teilweise im Isolationsmaterial eingeschäumt ist.

7. Kühlgerät nach einem der Ansprüche 3 bis 6, wobei die Abflussleitung (10) über einen Adapter (30) mit dem Auffangbehälter (8) verbunden ist.

8. Kühlgerät nach Anspruch 7, wobei der Adapter (30) aus einem weicheren Material als die Abflussleitung (10) besteht.

9. Kühlgerät nach einem der Ansprüche 7 oder 8, wobei am Auffangbehälter (8) ein Stutzen (32) angeordnet ist, und wobei der Adapter (30) den Stutzen (32) mit der Abflussleitung (10) verbindet, und insbesondere wobei der Adapter (30) mit dem Stutzen und/oder der Abflussleitung (10) durch Stecken verbunden ist.

10. Kühlgerät nach Anspruch 9, wobei der Adapter (30) einen ersten Abschnitt (34a), einen zweiten Abschnitt (34b) und einen dritten Abschnitt (34c) aufweist, wobei der erste und der zweite Abschnitt (34a, 34b) über den dritten Abschnitt (34c) verbunden sind,
wobei die Abflussleitung (10) mit dem ersten Abschnitt verbunden ist, insbesondere am ersten Abschnitt (34a) eingesteckt ist, und/oder wobei der Stutzen (32) mit dem zweiten Abschnitt (34b) verbunden ist, insbesondere am zweiten Abschnitt (34b) eingesteckt ist.

11. Kühlgerät nach einem der Ansprüche 9 oder 10, wobei der der Stutzen (32) und die Abflussleitung (10) mittels dem Adapter (30) beabstandet voneinander gehalten sind.

12. Kühlgerät nach einem der vorangehenden Ansprüche mit einem zweiten Nutzraum (2b), welcher unterhalb des ersten Nutzraums (2a) angeordnet ist, und insbesondere wobei das Kühlgerät dazu ausgestaltet ist, den zweiten Nutzraum (2b) auf eine tiefere Temperatur zu kühlen als den ersten Nutzraum (2a), und insbesondere wobei die tiefere Temperatur unter dem Gefrierpunkt liegt.

13. Kühlgerät nach Anspruch 12, wobei das Vakuum-Isolationspanel (14) mindestens 80% beider Nutzräume (2a, 2b) überdeckt, insbesondere 90% beider Nutzräume (2a, 2b) überdeckt, , insbesondere beide Nutzräume (2a, 2b) vollständig überdeckt.

14. Kühlgerät nach einem der Ansprüche 12 oder 13 und nach einem der Ansprüche 3 bis 11, wobei die Abflussleitung (10) am zweiten Nutzraum (2b) vorbei bis unterhalb des zweiten Nutzraums (2b) führt.

15. Kühlgerät nach Anspruch 14, wobei die Abflussleitung (10), von der Rückseite des Kühlgeräts gesehen, über mindestens einen Teil der Höhe des zweiten Nutzraums (2b) neben dem Vakuum-Isolationspanel (14) nach unten verläuft.

## Claims

1. Cooling appliance with
a first usable space (2a),
a cooling element (4) arranged on a wall of the first usable space (2a) for cooling the first usable space (2a),
a vacuum insulation panel (14) arranged outside the cooling element (4) and the first usable space (2a), which covers at least 50%, in particular at least 60%, in particular at least 80% of the first usable space (2a),
a collecting container (8) for collecting liquid condensing on the cooling element (4), and
a drain line (10), which leads from the collecting container (8) into an outer region of the cooling device,
wherein the drain line (10) has
a first section (10a), which is connected to the collection container (8), and
a second section (10b), which connects to the first section (10a) and, viewed from the rear of the cooling device, runs downwards laterally next to the vacuum insulation panel (14).

2. Cooling appliance according to claim 1, wherein the vacuum insulation panel (14) covers at least 90% of the first usable space (2a), in particular the entire first usable space (2a).

3. Cooling appliance according to one of the preceding claims, wherein the outer region is located in the base region (12) of the cooling appliance.

4. Cooling appliance according to one of the preceding claims, wherein the second section extends in a corner (20) of the cooling appliance.

5. Cooling appliance according to one of claims 3 or 4, wherein the drain line (10) leads to an evaporation container (22) which is arranged lower than the first usable space (2a), and in particular wherein at least a part of the evaporation container (22) is arranged below the first usable space (2a), vertically below.

6. Cooling appliance according to one of claims 3 to 5, wherein an insulation region (18) foamed with an insulation material is arranged between the vacuum insulation panel (14) and the first usable space (2a), wherein the drain line (10) is at least partially foamed in the insulation material.

7. Cooling appliance according to one of claims 3 to 6, wherein the drain line (10) is connected to the collecting container (8) via an adapter (30).

8. Cooling appliance according to claim 7, wherein the adapter (30) is made of a softer material than the drain line (10).

9. Cooling appliance according to one of claims 7 or 8, wherein a connecting piece (32) is arranged on the collecting container (8), and wherein the adapter (30) connects the connecting piece (32) to the drain line (10), and in particular wherein the adapter (30) is connected to the connecting piece and/or the drain line (10) by plugging.

10. Cooling device according to claim 9, wherein the adapter (30) has a first section (34a), a second section (34b) and a third section (34c), wherein the first and second sections (34a, 34b) are connected via the third section (34c),
wherein the drain line (10) is connected to the first section, in particular is plugged into the first section (34a), and/or wherein the nozzle (32) is connected to the second section (34b), in particular is plugged into the second section (34b).

11. Cooling appliance according to one of claims 9 or 10, wherein the nozzle (32) and the drain line (10) are held spaced apart from each other by means of the adapter (30).

12. Cooling appliance according to one of the preceding claims, having a second usable space (2b) which is arranged below the first usable space (2a), and in particular wherein the cooling appliance is adapted to cool the second usable space (2b) to a lower temperature than the first usable space (2a), and in particular wherein the lower temperature is below the freezing point.

13. Cooling appliance according to claim 12, wherein the vacuum insulation panel (14) covers at least 80% of both usable spaces (2a, 2b), in particular covers 90% of both usable spaces (2a, 2b), in particular completely covers both usable spaces (2a, 2b).

14. Cooling appliance according to one of claims 12 or 13 and according to one of claims 3 to 11, wherein the drain line (10) leads past the second usable space (2b) to below the second usable space (2b).

15. Cooling appliance according to claim 14, wherein the drain line (10), seen from the rear of the cooling appliance, runs downwards over at least a part of the height of the second usable space (2b) next to the vacuum insulation panel (14).

## Revendications

1. Appareil de réfrigération avec
un premier espace utile (2a),
un élément de refroidissement (4) disposé sur une paroi du premier espace utile (2a) pour refroidir le premier espace utile (2a),
un panneau d'isolation sous vide (14) disposé à l'extérieur de l'élément de refroidissement (4) et du premier espace utile (2a), qui recouvre au moins 50%, en particulier au moins 60%, en particulier au moins 80% du premier espace utile (2a),
un récipient collecteur (8) pour recueillir le liquide qui se condense dans l'élément de refroidissement (4), et
une conduite d'évacuation (10) qui mène du récipient collecteur (8) à une zone extérieure de l'appareil de refroidissement,
la conduite d'évacuation (10) comprenant :
une première section (10a) qui est reliée au récipient collecteur (8), et
une deuxième section (10b) qui se raccorde à la première section (10a) et qui, vue depuis un côté arrière de l'appareil de refroidissement, s'étend vers le bas à côté du panneau d'isolation sous vide (14).

2. Appareil de réfrigération selon la revendication 1, dans lequel le panneau d'isolation sous vide (14) recouvre au moins 90% du premier espace utile (2a), en particulier la totalité du premier espace utile (2a) .

3. Appareil de réfrigération selon l'une des revendications précédentes, dans lequel la zone extérieure se trouve dans la zone de fond (12) de l'appareil de réfrigération.

4. Appareil de réfrigération selon l'une des revendications précédentes, dans lequel la deuxième section s'étend dans un coin (20) de l'appareil de réfrigération.

5. Appareil de réfrigération selon l'une des revendications 3 ou 4, dans lequel la conduite d'évacuation (10) mène à un réservoir d'évaporation (22) disposé plus bas que le premier espace utile (2a), et en particulier dans lequel au moins une partie du réservoir d'évaporation (22) est disposée en dessous du premier espace utile (2a) et notamment verticalement en dessous.

6. Appareil de réfrigération selon l'une des revendications 3 à 5, dans lequel une zone d'isolation (18) remplie avec un matériau isolant moussé est disposée entre le panneau d'isolation sous vide (14) et le premier espace utile (2a), la conduite d'évacuation (10) étant au moins partiellement remplie de mousse dans le matériau isolant.

7. Appareil de réfrigération selon l'une des revendications 3 à 6, dans lequel la conduite d'évacuation (10) est reliée au récipient collecteur (8) par un adaptateur (30).

8. Appareil de réfrigération selon la revendication 7, dans lequel l'adaptateur (30) est constitué d'un matériau plus souple que la conduite d'évacuation (10).

9. Appareil de réfrigération selon l'une des revendications 7 ou 8, dans lequel une tubulure (32) est disposée au récipient collecteur (8), et dans lequel l'adaptateur (30) relie la tubulure (32) à la conduite d'évacuation (10), et en particulier dans lequel l'adaptateur (30) est relié à la tubulure et/ou à la conduite d'évacuation (10) par enfichage.

10. Appareil de réfrigération selon la revendication 9, dans lequel l'adaptateur (30) comprend une première section (34a), une deuxième section (34b) et une troisième section (34c), les première et deuxième sections (34a, 34b) étant reliées par la troisième section (34c),
dans lequel la conduite d'évacuation (10) est reliée à la première section, notamment enfichée sur la première section (34a), et/ou dans lequel la tubulure (32) est reliée à la deuxième section (34b), notamment enfichée sur la deuxième section (34b).

11. Appareil de réfrigération selon l'une des revendications 9 ou 10, dans lequel la tubulure (32) et la conduite d'évacuation (10) sont maintenues à distance l'une de l'autre au moyen de l'adaptateur (30).

12. Appareil de réfrigération selon l'une quelconque des revendications précédentes, avec un deuxième espace utile (2b) disposé en dessous du premier espace utile (2a), et en particulier dans lequel l'appareil de réfrigération est configuré pour refroidir le deuxième espace utile (2b) à une température inférieure à celle du premier espace utile (2a), et en particulier dans lequel la température inférieure est inférieure au point de congélation.

13. Appareil de réfrigération selon la revendication 12, dans lequel le panneau d'isolation sous vide (14) recouvre au moins 80% des deux espaces utiles (2a, 2b), en particulier recouvre 90% des deux espaces utiles (2a, 2b), en particulier recouvre les deux espaces utiles (2a, 2b) complètement.

14. Appareil de réfrigération selon l'une des revendications 12 ou 13 et selon l'une des revendications 3 à 11, dans lequel la conduite d'évacuation (10) passe devant le deuxième espace utile (2b) jusqu'en dessous du deuxième espace utile (2b).

15. Appareil de réfrigération selon la revendication 14, dans lequel la conduite d'évacuation (10), vue depuis le côté arrière de l'appareil de refroidissement, s'étend vers le bas sur au moins une partie de la hauteur du deuxième espace utile (2b) à côté du panneau d'isolation sous vide (14).
